Europäisches Patentamt

European Patent Office

Office européen des brevets

(11) Publication number : **0 498 538 A2**

# (12) EUROPEAN PATENT APPLICATION

(21) Application number : **92300375.0**

(22) Date of filing : **16.01.92**

(51) Int. Cl.⁵ : **C03B 9/353,** C03B 9/41, C03B 9/16

(30) Priority : **05.02.91 GB 9102469**

(43) Date of publication of application :
**12.08.92 Bulletin 92/33**

(84) Designated Contracting States :
**DE FR GB IT**

(71) Applicant : **Emhart Glass Machinery Investments Inc.**
**c/o RL&F Service Corp. One Rodney Square, 10th Floor 10th and King Streets Wilmington, Delaware 19801 (US)**

(72) Inventor : **de Fosseux, Evrard**
**Le Pre-Vent**
**F-78150 le Chesuay (FR)**
Inventor : **de Boutray, Olivier**
**5 Rue St. Didier**
**F-75116 Paris (FR)**

(74) Representative : **Randall, John Walter et al**
**Emhart Patents Department, Lyn House, 39 The Parade**
**Oadby, Leicester LE2 5BB (GB)**

(54) **Mould closure monitoring.**

(57) A mould closure monitoring device in a glassware making machine comprises two transducers each connected to one of two opposed mould carriers. The signals from the transducers are summed and compared with a standard to determine if the moulds are properly closed at the appropriate point in the operating cycle of the machine.

FIG. 1

EP 0 498 538 A2

The present invention relates to mould arrangements for use in a glassware making machine.

When a glassware making machine is in operation, mould parts, carried by mould carriers, are moved between open and closed postions. If the mould parts fail to close correctly, unacceptable ware having prominent seams is likely to be formed and other faults on the ware or damage to the machine may occur. Failure to close correctly may be caused by mechanical interference due for example, to glass becoming trapped between mould parts, to accidental displacement of one of the mould parts or to some malfunction in the machine operation.

A monitoring device arranged to indicate whether the mould parts are properly closed has to be sufficiently sensitive to determine if a gap of as little of 0.25 mm exists between the mould parts when in their closed position, as a gap of this size will result in ware with unacceptably prominent seams.

The device cannot in practice be mounted on the mould parts themselves as not only are they operating at a high temperature (400 - 500°C) but they have frequently to be exchanged for cleaning. The device must be well protected from heat and mechanical damage, but the more remote the device is from the moulds the more likely is it that spurious signals will be generated.

European Patent 059576 disclosed two methods of determining whether mould parts are properly closed in a glassware making machine. In the first, a transducer in the form of a linear variable differential transformer (LVDT) is mounted with its armature attached to one of a pair of mould carriers mounted for opposed parallel movement. Measurement of the output from the LVDT is made at a time when mould parts carried by the carriers would be expected to be closed and compared with a running average of a number of immediately previous similar measurements. A discrepancy in the last measurement which is greater than a pre-determined value triggers an alarm either to warn the machine operator of the fault or to stop the faulty part of the glassware making machine. A problem with this approach is that the position of only one mould carrier is measured and, although the other mould carrier is mechanically linked to it, there are many mechanical joints and bearings in this linkage. Slackness in these bearings and joints due to mechanical working tolerances and wear is taken up when the closing force is applied to the mould carriers. However, this slackness is not always taken up in a repeatable manner, particularly if the mechanism is subject to vibration or mechanical shock which it frequently is. This means that the lateral position of the fully closed mould parts is not well defined and a signal that one mould carrier is out of position by a small amount is not necessarily an indication that the mould parts are not fully closed. Unnecessary stoppage of the machine can therefore occur which is most undesirable because of the high cost of the production which is lost.

A second detection system disclosed in EP o59576 comprises the use of a position transducer (LVDT) to monitor the position of the piston of the cylinder operating the linkage to bring the mould parts to the closed position. This is done at a time when the moulds would be expected to closed. This has the advantage of making the measurement at a point in the linkage equally positioned between the mould parts but the number of joints and bearings in the linkage between the measuring point and the moulds make the measurement an uncertain indicator of whether the mould parts are in their properly closed positions.

European Patent 0 142 320 discloses an optical encoder driven from one of the shafts in the mould closing mechanism. This has a number of practical advantages such as the capability of being retro-fitted to many existing machines. However, it does not solve the problems found with the systems disclosed in European Patent Specification 059576, in particular in that it is remote from the mould parts themselves, and thus is again an uncertain indicator of whether the mould parts are in their properly closed positions.

It is one of the objects of the present invention to provide a mould arrangement with a mould closure monitoring device which is reliable in operation.

It is another of the objects of the present invention to provide a reliable method of determining whether the mould parts are properly closed at the appropriate point in the operating cycle of the glassware making machine.

The present invention provides a mould arrangement for use in a glassware making machine comprising two mould carriers carrying mould parts supported on the carriers between a mould open and a mould closed position and a mould closure monitoring device arranged to indicate whether the mould parts are properly closed at an appropriate point in the operating cycle of the machine characterized in that a transducer is connected to each mould carrier, each transducer giving a position signal when the mould carriers are in their mould closed position, the signals from the two transducers being represented by $L + dL$ and $R + dR$ where $L$ and $R$ are the normal signals when the mould parts are correctly closed, and $dL$ and $dR$ are taken as increasing positively as the carriers move inwards from their normal mould closed positions, and the monitoring device comprises means for comparing the algebraic sum of $L + dL$ and $R + dR$ with a standard to determine whether the mould parts are properly closed.

While a mould arrangement according to the invention may comprise mould carriers which are moved between their open and closed positions along parallel paths, it is particularly useful with a mould arrangement where the mould carriers are in the form of arms mounted for pivotal movement about an axis between mould open and mould closed positions.

Preferably in a mould arrangement according to the invention the transducers are angular position transducers which may be linked to their respective mould carriers through hinged links, thus enabling the movement of the mould carriers to be multiplied.

The present invention also provides in its method aspects, a method of determining, in a mould arrangement in a glassware making machine comprising two mould carriers mounted for movement to carry mould parts supported on the carriers between a mould open and a mould closed position, whether the mould parts are properly closed at an appropriate point in the operating cycle of the machine

characterized in that a monitoring device comprises two transducers one connected to each mould carrier and each transducer is arranged to give a position signal when the mould carriers are in their closed position, the signals from the two transducers being represented by L + dL and R + dR where L and R are the normal signals when the mould parts are correctly closed, and dL and dR are taken as increasing positively as the carriers close inwards from their normal mould closed positions, and the algebraic sum of L + dL and R + dR is compared with a standard to determine whether the mould parts are properly closed.

Preferably in carrying out a method according to the invention a series of signals is taken from each transducer when the mould carriers are in their closed position and is averaged and the algebraic sum of the averages is compared with the standard.

There now follows a description, to be read with reference to the accompanying drawings of a mould arrangement embodying the invention and in its operation illustrating the method aspects of the invention.

In the accompanying drawings

Figure 1 shows a general view of a mould arrangement embodying the invention

Figure 2 is a diagrammatic plan view of the arrangement of Figure 1.

Figure 3 is a flow chart.

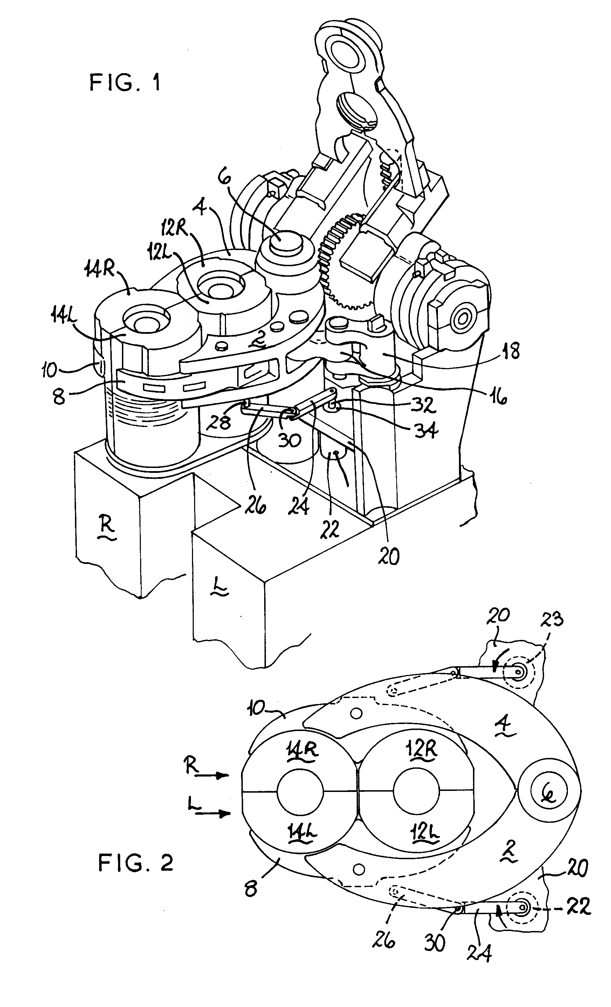

The mould arrangement shown in Figure 1 forms part of a glassware making machine and comprises two mould carriers in the form of arms, 2, 4 which are mounted for angular movement about a vertical shaft 6. The mould carrier arms 2,4 support inserts 8, 10 respectively which are pivotally mounted on the arms, and support two pairs of mould parts 12L, 12R, 14L, 14R. The mould parts when in their closed position, as shown in Figure 1, define mould cavities in which a glass article may be formed. The mould carrier arms 2,4 are arranged to be moved between open and closed positions to carry the mould parts between open and closed positions. A link 16 pivoted to the carrier arm 2 is also pivoted to a lever 18 mounted on a vertical shaft (not shown). Rotation of the shaft will rotate the lever 18 and carry the arm 2 between its closed and its open positions. A mirror image of this arrangement is provided to carry the arm 4 between its closed and its open position.

Mounted on a bracket 20 attached to a frame of the glassware making machine is an angular position transducer 22 which forms part of a monitoring device arranged to indicate whether the mould parts are properly closed when the arms 2, 4 are in their closed position. The transducer 22 is linked to the carrier arm 2 by two links 24 and 26, the link 26 being pivoted to the carrier arm 2 at 28, the link 24 being pivoted to the link 26 at 30 and secured to a shaft 32 rotatably mounted in a bearing 34 on the bracket 20. The transducer 22 is connected to the shaft 32. The link 26 is readily detachable from the pivots 28 and 30 so that, if desired, one link of a different length may be substituted for another and also to facilitate the replacement of the arm 2 if desired.

The arrangement of the links 24 and 26 is such that, during movement of the carrier arm 2 between its open and closed positions the links are underneath the arm for much of the movement, which serves to protect the links from accidental mechanical damage. The links 24 and 26 are approximately the same length and are so arranged that when the mould carrier arm 2 is in its closed position the centre line of link 24 is at a small acute angle, about 15°, to the centre line of the link 26. This arrangement gives a good mechanical amplification to rotation of the shaft 32 on movement of the arm 2 while minimizing the effects of wear on the linkage between the shaft 32 and the arm 2.

The transducer 22 is a brushless resolver manufactured by Hightech Components Ltd of Hampshire, England Model 11BRCX-300-A-95. This transducer, when energized by a 4 volt RMS signal at 4 kHz delivers two differential sinusoidal signals in quadrature. The amplitude ratio of these signals depends on the resolver angle. Electronics are provided in integrated circuit form which convert this signal into a 14 bit binary number. The resolution of the transducer (i.e. 1 part in 16384), in a manner which will be described is found to be more than sufficient readily to detect a non-closure of the mould parts by 0.25 mm.

A mirror image of the paris just described are also provided linking a second transducer 23 of the monitoring device (see Figure 2) to the mould carrier arm 4.

The glassware making machine comprises a conventional electronic timing system which is arranged to provide a signal to the monitoring device at the time when the mould parts would normally be expected to be closed. This signal initiates a period during which monitoring of the mould closed position takes place. The speed of the electronics is fast enough to allow multiple readings to be taken from the transducer when the mould carrier arms are in the closed position in a period which is short compared with the time for which the moulds are closed.

Each time the measurement procedure is started in response to a signal from the timing system an average measurement is made of the position of each of the two mould carrier arms 2, 4. An algebraic sum is then calculated of these two values. A running average is kept of the positional results for each of the two mould carrier arms 2, 4 taken during a number of immediately previous cycles of the machine. A comparison between these two running averages and the algebraic sum for the current cycle is then used to determine if satisfactory mould closure has been achieved.

A description follows, with reference to Figure 2, of the data processing procedure used in the mould monitoring device. The transducer 22, which is associated with the mould carrier arm 2 is matched with the transducer 23 associated with the mould carrier arm 4.

If the reading of the transducer 22 when the arm 2 is in its nominally correct closed position is L, the actual reading taking is L + dL, where dL is taken as positively increasing as the arm 2 moves in the closing direction. Similarly the actual reading taken from the transducer 23 is R + dR where dR is taken as positively increasing as the arm 4 moves in the closing direction. The two sets of readings are averaged to give Av (L + dL) and Av (R + dR)

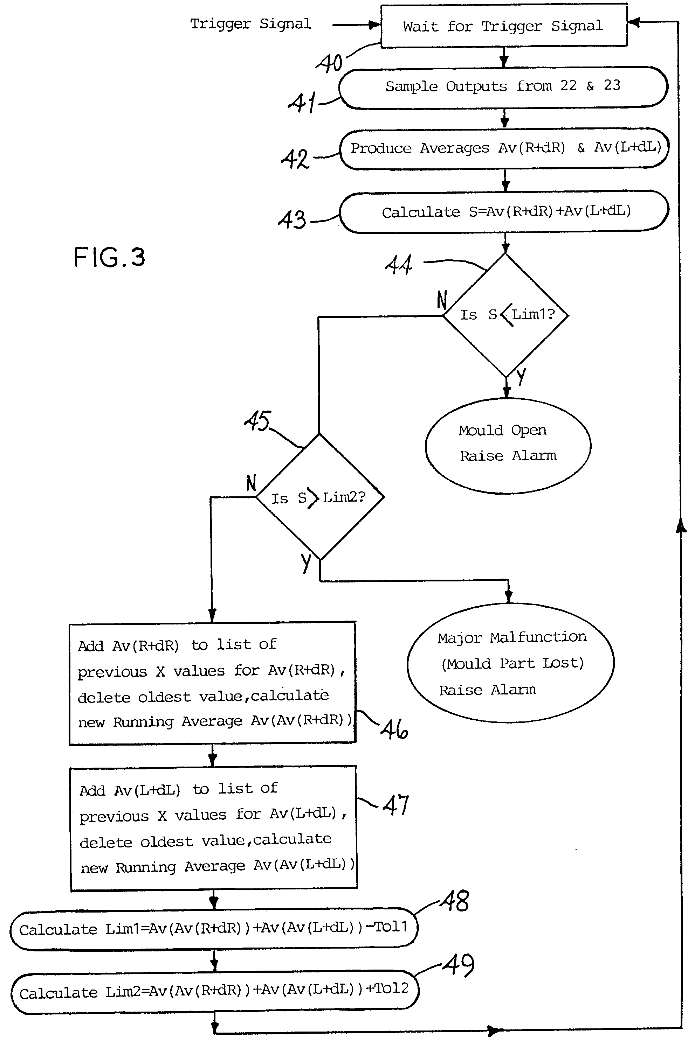

A flow chart is shown in figure 3. At the first stage 40 of the flow chart, the data processor is waiting for a signal to indicate that the time is such that the mould carrier arms 2,4 are expected to be in the closed position. On receiving this signal the data processor proceeds to stage 41 and samples the outputs from transducers 22 and 23 for a set period of time, typically 0.5 seconds. Once the sampling is complete the data processor proceeds to stage 42 to average the two sets of readings to produce two averages Av(L+dL) and Av(R+dR) and to stage 43 to calculate the algebraic sum of them S=Av(R+dR)+ Av(L+dL). In stage 44 the data processor compares the algebrric sum S with a first limit Lim 1. If S is found to be algebraicly less than Lim 1 this indicates that the mould carrier arms 2 and 4 are not close enough to the correct closed position to be acceptable and an appropriate emergency procedure is then initiated. This emergency procedure can be a visible or audible alarm or, if required, an automatic emergency stop procedure for the machine can be initiated. If the algebraic sum S is greater than first limit Lim 1 then the data processor proceeds to stage 45 and compares the algebraic sum S with a second limit Lim 2. If S is found to be greater than the second limit, Lim 2, this indicates that the mould carrier arms 2 and 4 have moved well past the normally closed position, which can only happen if one of more of the mould parts carried by the mould carrier arms 2 and 4 have become detached. If this condition is detected then the appropriate emergency procedure is initiated.

If stages 44 and 45 of the data processing have not detected a machine malfunction the data processor moves to stage 46. The data processor has been keeping in store the last X number of Av(R + dR) values (X being typically equal to 10). The oldest of these X values is now discarded and the current value of Av(R + dR) is added to the list. An average Av (Av(R + dR)) of these X values is then calculated. In stage 47 the data processor similarly calculates an up dated value for Av(Av(L + dL)) from the last X values of Av(L + dL). In stage 48, the data processor takes the algebraic sum Av(AvR+dR) + Av(AvL+dL) and takes from it a small positive value Tol 1 to produce a value for Lim 1 which will be used in the next cycle at stage 44. Tol 1 is thus the amount by which the mould carrier arms 2 and 4 are allowed to be open before an alarm signal is generated. In stage 49, the data processor takes the algebaraic sum Av(Av(R + dR) +Av(Av(L + dL)) and adds to it a small positive value Tol 2 to produce a value for Lim 2 which will be used in the next cycle at stage 45. Tol 2 is thus the amount by which the mould carriers 2 and 4 are allowed to move past the closed position before an alarm signal is generated. Having completed this procedure the data processor returns to the first stage 40 and awaits the next trigger signal indicating that the mould carrier arms 2 and 4 are expected to be in the closed position. Stages 44 and 45 are suppressed during the start up phase of the machine until running averages have been established.

As has, already been described, because of slackness in the joints and bearings in the linkage which is used to close the moult carrier arms, the moulds do not always close exactly in the same place each cycle. By reference to Figure 2 and the example described above, it will be seen that should, for example, the moulds close fully but slightly to the right of the normal position transducer 22 will give a higher output while transducer 23 will give a lower output. For the small deviations from the norm usually encountered the two values will change by approximately the same amount and so the sum S them will hardly chance and, when compared with Lim 1, no emergency action will be triggered. This is an advantage of the described method of analysing the data from transducers 22 and 23 for if only the position of one mould arm had been measured then the same deviation from the norm could have triggered an unnecessary emergency action.

A further advantage of the described method is seen should the linkage be subjected to a strong vibration while the moulds are held closed by pressure exerted by the linkage. Such vibration could come for example through the floor on which the machine rests or from maintenance work being carried out on an adjacent part of the machine. It is found that such strong vibration has the effect of making the moulds 12 and 14, the inserts on which they hang, and the pins on which the inserts pivot in the mould carrier arms fit more snugly together than normal. The mould carrier arms 2 and 4 therefore appear to be more "closed" than normal. If this occurs in the example given and shown in Figure 2, both transducer 22 and 23 will give a higher output than normal. The sum Av(R + dR) + Av(L +dL) will be algebraicly greater than normal but when compared algebraicly with Lim1 will not trigger emergency action. It is found that this method of analysing the data from transducers 22 and 23 renders the system virtually immune from vibrational interference so that very few spurious alarms are generated.

A third advantage is seen should a mould part become accidentally detached from the insert and carrier arm which normally holds it - a situation which can occur in practice. The mould carrier arms 2 and 4 move considerably beyond their normally closed position and the sum Av(R + dR) + Av(L + dL) in the example given becomes significantly larger. This is detected by comparison with the value Lim2. Lim2 is set so that the slight over-closing caused by strong vibration does not trigger an alarm but the much larger over-closing due to a missing mould part does.

## Claims

1. A mould arrangement for use in a glassware making machine comprising two mould carriers carrying mould parts supported on the carriers between a mould open and a mould closed position and a mould closure monitoring device arranged to indicate whether the mould parts are properly closed at an appropriate point in the operating cycle of the machine characterized in that a transducer (22,23) is connected to each mould carrier (2,4), each transducer giving a position signal when the mould carriers are in their mould closed position, the signals from the two transducers being represented by L + dL and R + dR where L and R are the normal signals when the mould parts are correctly closed, and dL and dR are taken as increasing positively as the carriers move inwards from their normal mould closed positions, and the monitoring device comprises means for comparing the algebraic sum of L + dL and R + dR with a standard to determine whether the mould parts are properly closed.

2. A mould arrangement according to claim 1 characterized in that the mould carriers (2,4) are in the form of arms mounted for pivotal movement about an axis (6) between mould open and mould closed positions.

3. A mould arrangement according to one of claims 1 and 2 characterized in that the transducers (22,23) are angular position transducers.

4. A mould arrangement according to claim 3 characterized in that each transducer (22,23) is linked to its respective mould carrier through two hinged links (24,26).

5. A method of determining, in a mould arrangement in a glassware making machine comprising two mould carriers mounted for movement to carry mould parts supported on the carriers between a mould open and a mould closed position, whether the mould parts are properly closed at an appropriate point in the operating cycle of the machine characterized in that a monitoring device comprises two transducers (22,23), one connected to each mould carrier (2,4) and each transducer is arranged to give a position signal when the mould carriers are in their closed position, the signals from the two transducers being represented by L + dL and R + dR where L and R are the normal signals when the mould parts are correctly closed, and dL and dR are taken as increasing positively as the carriers move inwards from their normal mould closed positions, and the algebraic sum of L + dL and R + dR is compared with a standard to determine whether the mould parts are properly closed.

6. A method according to claim 5 characterized in that when the mould carriers are in their closed position a series of signals is taken from each transducer and is averaged and the algebraic sum of the averages (Av(L + dL) + Av(R + dR) is compared with the standard.

7. A method according to one of claims 5 and 6 characterized in that the standard is one which if not reached indicates that the moulds are not in a fully closed position.

8. A method according to one of claims 5,6 and 7 characterized in that the standard is one which if exceeded indicates that the mould carrier arms have moved beyond their properly closed position, e.g. because of absence of one of the mould parts.

9. A method according to claim 6 characterized in that the standard (Lim 1) is calculated according to the formula in

Lim 1 = Av Av(R+dR)) + Av(Av(L+dL)) - Tol 1
where

Av(R+dR) is the average signal from one mould carrier arm.

Av(L+dL) is the average signal from the other mould carrier arm.

Av(Av(R+dR)) is an average of Av(R+dR) taken over a preselected number of immediately preceding mould closing occurrences.

Av(Av(L+dL)) is an average of Av(L+dL) taken over the preselected number of immediately preceding mould closing occurences.

Tol 1 is a predetermined tolerance for the moulds to be properly closed,

and if

Av(L + dL) + Av(R+dR) < Lim 1

the mould parts are not properly closed and appropriate action is initiated.

10. A method according to claim 9

characterized in that a second standard Lim 2 is calculated according to the formula

Lim 2 = Av(Av(R+dR)) + Av(Av(L+dL)) + Tol 2.

Where Tol 2 is a predetermined tolerance for the moulds to be properly closed

and if

Av(R+dR) + Av(L+dL) > Lim 2 the mould parts have moved part the properly closed position and appropriate action is initiated.

FIG. 1

FIG. 2

**FIG.3**

40 → Trigger Signal → Wait for Trigger Signal

41 → Sample Outputs from 22 & 23

42 → Produce Averages Av(R+dR) & Av(L+dL)

43 → Calculate S=Av(R+dR)+Av(L+dL)

44 → Is S<Lim1?

Y → Mould Open Raise Alarm

45 → Is S>Lim2?

Y → Major Malfunction (Mould Part Lost) Raise Alarm

46 → Add Av(R+dR) to list of previous X values for Av(R+dR), delete oldest value, calculate new Running Average Av(Av(R+dR))

47 → Add Av(L+dL) to list of previous X values for Av(L+dL), delete oldest value, calculate new Running Average Av(Av(L+dL))

48 → Calculate Lim1=Av(Av(R+dR))+Av(Av(L+dL))-Tol1

49 → Calculate Lim2=Av(Av(R+dR))+Av(Av(L+dL))+Tol2